# EUROPEAN PATENT APPLICATION

(11) **EP 4 625 014 A1**
(43) Date of publication of application: **01.10.2025**
(21) Application number: 23909390.9
(22) Date of filing: 22.09.2023
(51) Int. Cl.: G02B 6/38

(54) **FERRULE ASSEMBLY, PREFABRICATED OPTICAL FIBER AND OPTICAL FIBER CONNECTOR**

(30) Priority: 27.12.2022 CN 202211690913
(71) Applicant: Huawei Technologies Co., Ltd., Shenzhen, Guangdong 518129 (CN)
(72) Inventor: TANG, Feng, Shenzhen, Guangdong 518129 (CN); LI, Xiupeng, Shenzhen, Guangdong 518129 (CN); LI, Yuanyuan, Shenzhen, Guangdong 518129 (CN)
(74) Representative: Gill Jennings & Every LLP
(86) International application number: PCT/CN2023/120711
(87) International publication number: WO 2024/139455

(57) **Abstract**

A ferrule assembly (200), a prefabricated optical fiber, and an optical fiber connector (100) are disclosed. The ferrule assembly (200) includes a ferrule module (210) and a ring (220), the ring (220) is sleeved on the ferrule module (210), and the ring (220) is rotatable relative to the ferrule module (210). A positioning part (201) is arranged on a surface of the ring (220), and the ring (220) may be rotated based on a direction in which the optical fiber (101) deviates from an outer diameter axis of the ferrule assembly (200), so that the positioning part (201), the optical fiber (101), and the outer diameter axis of the ferrule assembly (200) have a relatively fixed position relationship. The positioning part (201) positions the direction in which the optical fiber (101) deviates from the outer diameter axis of the ferrule assembly (200). When two ferrule modules (210) are interconnected, two positioning parts (201) are opposite, and end faces of two optical fibers (101) are also opposite. Therefore, the end faces of the optical fibers (101) highly overlap, and an optical signal loss is small. The ring (220) may alternatively be connected to a housing (230) via the positioning part (201).

## Description

This application claims priority to Chinese Patent Application No. 202211690913.1, filed with the China National Intellectual Property Administration on December 27, 2022 and entitled "FERRULE ASSEMBLY, PREFABRICATED OPTICAL FIBER, AND OPTICAL FIBER CONNECTOR", which is incorporated herein by reference in its entirety.

### TECHNICAL FIELD

Embodiments of this application relate to the optical component field, and in particular, to a ferrule assembly, a prefabricated optical fiber, and an optical fiber connector.

### BACKGROUND

An optical fiber connector is a detachable device connected to optical fibers. The optical fiber connector interconnects end faces of two optical fibers, allowing optical energy output by a transmit fiber to be coupled to a receive fiber to a maximum extent, and minimizing impact on a system caused by involvement of the optical fiber connector in an optical link. To some extent, the optical fiber connector affects reliability and performance of an optical transmission system in various aspects.

An insertion loss is an important parameter for evaluating the optical fiber connector. Reducing a loss of the optical fiber connector is one of approaches to improve reliability of the optical transmission system.

### SUMMARY

Embodiments of this application provide a ferrule assembly, a prefabricated optical fiber, and an optical fiber connector, to resolve a problem of a large loss of the optical fiber connector.

To achieve the foregoing objective, this application uses the following technical solution.

According to a first aspect of this application, a ferrule assembly is provided. The ferrule assembly is used to be connected to an optical fiber, and the ferrule assembly includes a ferrule module and a ring. The ferrule module is used to be connected to an end of the optical fiber, and the ferrule module is sleeved on the optical fiber. The ring is sleeved on the ferrule module, and the ring is rotatable relative to the ferrule module. A positioning part is arranged on a surface of the ring, and the positioning part is configured to position the optical fiber. In this way, the ring may be rotated based on a position relationship between the optical fiber and the ferrule module, so that a relatively determined position relationship exists between the positioning part and the optical fiber. When two ferrule modules are in an interconnected state, positioning parts of two ferrule assemblies are opposite, axes of two optical fibers are opposite, end faces of the two optical fibers highly overlap, and an optical signal loss is small. A structure of an optical fiber connector is adjusted to reduce the signal loss during optical fiber interconnection.

With reference to the first aspect, in some possible implementations, an axis of the optical fiber, the positioning part, and an axis of the ferrule module are coplanar. In this way, in a process of rotating the ring and the ferrule module, it is convenient to detect the axis of the optical fiber and the positioning part, thereby simplifying an assembly process.

With reference to the first aspect, in some possible implementations, the positioning part is located on an end face of the ring. In this way, in a process of rotating the ring and the ferrule module, it is convenient to observe a relative position of the positioning part and the ferrule module.

With reference to the first aspect, in some possible implementations, the positioning part is located on an outer circumferential surface of the ring. In this way, in a process of rotating the ring and the ferrule module, it is convenient to observe a relative position of the positioning part and the ferrule module. In addition, in a process of connecting the ring and a housing, it is also convenient to observe a relative position of the housing and the positioning part.

With reference to the first aspect, in some possible implementations, an inner circumferential surface of the ring is circular. In this way, even if the ring rotates around the axis of the ferrule module to any position, the ring can be connected to the ferrule module.

With reference to the first aspect, in some possible implementations, the ferrule module includes a ferrule and a flange, the ferrule is sleeved on the optical fiber, the flange is sleeved on the ferrule, the flange is connected to the optical fiber, the ring is sleeved on the flange, and the ring is rotatable relative to the flange. In this way, a direction in which the positioning part deviates from an axis of the ferrule may be changed by rotating the ring and the flange, so as to implement a function of the positioning part to position the optical fiber.

With reference to the first aspect, in some possible implementations, an end face of the ferrule protrudes from an end face of the flange. In this way, when two ferrule modules are in an interconnected state, end faces that are of ferrules and that protrude from the flange abut against each other, and may facilitate quick alignment.

With reference to the first aspect, in some possible implementations, a stop portion is arranged at an end of the flange along an axial direction, and when the ring and the flange are in a connected state, the stop portion abuts against the ring. In this way, when the ring and the flange are in the connected state, the stop portion can prevent the ring from falling out of the flange, and has a function of positioning the ring.

With reference to the first aspect, in some possible implementations, an inner wall of the ring has a first step surface, an outer wall of the flange has a second step surface, and when the ring and the flange are in the connected state, the first step surface abuts against the second step surface. In this way, a contact area of the ring and the flange is relatively larger, and connection strength of the ring and the flange is greater, so that relative rotation of the ring and the flange can be avoided when the ring and the flange are in the connected state.

With reference to the first aspect, in some possible implementations, at least a part of an outer surface of the flange is a rough surface, and the rough surface is in interference fit with the ring. In this way, the rough surface can increase friction force of the flange and the ring, increase the connection strength of the flange and the ring, and avoid relative rotation of the ring and the flange when the ring and the flange are in the connected state.

With reference to the first aspect, in some possible implementations, a plurality of convex edges are arranged on the rough surface, and the convex edges extend along an axial direction of the flange. Therefore, the convex edges may increase the friction force between the flange and the ring.

With reference to the first aspect, in some possible implementations, a surface of the ferrule module has a grabbing part. In this way, the grabbing part may be used as a force point for rotating the ferrule module and the ring, and more effort is saved when the ferrule module and the ring are rotated.

With reference to the first aspect, in some possible implementations, the ferrule assembly further includes a housing, the housing is sleeved on the ring, and the housing is connected to the ferrule module or the ring. In this way, the housing can protect the ferrule module and the ring.

With reference to the first aspect, in some possible implementations, a connecting part is arranged on an inner wall of the housing, and the connecting part is connected to the positioning part. In this way, the positioning part positions the optical fiber, and in addition, the positioning part may be further connected to the housing. In this way, the positioning part may not be additionally arranged, and a part at which the ring and the housing are connected may be determined as the positioning part.

With reference to the first aspect, in some possible implementations, the positioning part is a convex part, and the connecting part is a groove. In this way, the positioning part of the convex part structure does not affect mechanical performance of the ring, and the convex part and the groove may implement a connection between the housing and the ring.

With reference to the first aspect, in some possible implementations, the positioning part is a groove, and the connecting part is a convex part. In this way, the housing and the ring may be connected through the convex part and the groove.

With reference to the first aspect, in some possible implementations, an identification part is arranged on a surface that is of the housing and that is away from the ring, and the identification part is for positioning the positioning part. In this way, the identification part may position the positioning part, so as to position the optical fiber. When two ferrule assemblies are inserted into an optical fiber adapter, so that two ferrule modules are in an interconnected state, identification parts of the two ferrule assemblies are opposite; two positioning parts are opposite, and axes of two optical fibers are also opposite. This facilitates observation of the optical fiber connector and the optical fiber adapter during assembly.

With reference to the first aspect, in some possible implementations, the ferrule assembly further includes a waterproof housing, and the waterproof housing is sleeved on the ring or the ferrule module. In this way, the waterproof housing can improve waterproof performance of the ferrule assembly, and when the ferrule assembly is used in a waterproof optical fiber connector, a service life of the ferrule assembly can be improved.

With reference to the first aspect, in some possible implementations, the ferrule assembly further includes: an elastic member, and the elastic member is elastically connected to the ferrule module or the ring. In this way, when two ferrule assemblies are in an interconnected state, the elastic member applies, to the ferrule module, a force in an insertion direction of the ferrule assembly, so that the two ferrule assemblies tend to approach each other, and the two ferrule assemblies are prevented from being separated.

According to a second aspect, a prefabricated optical fiber is provided. The prefabricated optical fiber includes: an optical fiber and any ferrule assembly provided in the first aspect, an end of the optical fiber is connected to the ferrule module, and the ferrule module is sleeved on the optical fiber and connected to the optical fiber. In this way, an optical axis of the prefabricated optical fiber may be positioned by a positioning part. When two prefabricated optical fibers are in an interconnected state, end faces of optical fibers highly overlap, and an optical signal loss is small.

According to a third aspect, an optical fiber connector is provided. The optical fiber connector is used to be connected to an optical fiber adapter, the optical fiber connector includes a frame sleeve and any ferrule assembly provided in the first aspect, the frame sleeve is sleeved on the ferrule assembly, and the frame sleeve is used to be connected to the adapter. In this way, when two optical fiber connectors are inserted into the optical fiber adapter and are in an interconnected state, positioning parts are opposite, end faces of optical fibers abut against each other and highly overlap, and an optical signal loss is small.

### BRIEF DESCRIPTION OF DRAWINGS

FIG. 1 is a diagram of a structure of an optical link according to an embodiment of this application;
FIG. 2a is a diagram of a structure of an optical fiber connector in a related technology;
FIG. 2b is a diagram of a structure of an optical fiber connector and an end face of an optical fiber in a related technology;
FIG. 2c is a diagram of a structure of a ferrule assembly in a related technology;
FIG. 3a is a diagram of a structure of an optical fiber connector according to an embodiment of this application;
FIG. 3b is a diagram of an exploded structure of the optical fiber connector shown in FIG. 3a;
FIG. 4a is a diagram of a structure of a ferrule assembly according to an embodiment of this application;
FIG. 4b is a diagram of a structure of an end face of a ferrule assembly according to an embodiment of this application;
FIG. 4c is a diagram of a structure of an optical fiber and a ferrule module according to an embodiment of this application;
FIG. 4d is a diagram of a structure of an end face of an optical fiber and an end face of a ferrule module shown in FIG. 4b;
FIG. 4e is a diagram of a state of a ferrule module and a positioning part according to an embodiment of this application;
FIG. 4f is a diagram of a state presented when the ferrule module and the positioning part in FIG. 4e rotate relatively;
FIG. 5 is a diagram of a structure of a ring according to an embodiment of this application;
FIG. 6a is a diagram of a structure of a ferrule module and a ring according to an embodiment of this application;
FIG. 6b is a diagram of an internal structure of a ferrule module and a ring according to an embodiment of this application;
FIG. 7a is a diagram of a structure of a flange according to an embodiment of this application;
FIG. 7b is a diagram of a structure of another flange according to an embodiment of this application;
FIG. 8 is a diagram of an internal structure of a ferrule assembly according to an embodiment of this application;
FIG. 9 is a diagram of a structure of a first housing provided by the ferrule assembly shown in FIG. 8;
FIG. 10a is a diagram of a structure of another optical fiber connector according to an embodiment of this application;
FIG. 10b is a diagram of a structure of a ferrule assembly in the optical fiber connector in FIG. 10a;
FIG. 10c is a diagram of an internal structure of the ferrule assembly in FIG. 10a;
FIG. 10d is a diagram of a structure of a first housing in the optical fiber connector in FIG. 10a;
FIG. 11a is a diagram of a structure of another optical fiber connector according to an embodiment of this application;
FIG. 11b is an exploded view of the optical fiber connector in FIG. 11a;
FIG. 11c is a diagram of an internal structure of the optical fiber connector in FIG. 11a;
FIG. 11d is a diagram of a structure of a ferrule assembly in FIG. 11a;
FIG. 12a is a flowchart of a connection process of a ferrule assembly and an optical fiber according to an embodiment of this application;
FIG. 12b is a diagram of a structure obtained by performing S1 in FIG. 12a;
FIG. 12c is a diagram of a structure obtained by performing S2 in FIG. 12a;
FIG. 12d is a diagram of a structure obtained by performing S5 in FIG. 12a;
FIG. 12e is a diagram of a structure obtained by performing S6 in FIG. 12a;
FIG. 13a is a flowchart of another connection process of a ferrule assembly and an optical fiber according to an embodiment of this application; and
FIG. 13b is a diagram of a structure obtained by performing S8 in FIG. 13a.

In the figures: 10-transmit fiber; 20-receive fiber; 30-optical fiber adapter; 01-optical fiber connector; 001-ferrule module; 002-optical fiber; 02-frame sleeve; 021-groove; 03-guiding part; 010-ferrule; 020-flange; 100-optical fiber connector; 101-optical fiber; 102-bare optical fiber; 103-coating layer; 104-outer part; 105-tail sheath; 110-frame sleeve; 111-identification part; 120-protective cap; 121-connecting rope; 130-adhesive-filled sleeve; 140-heat shrink tube; 150-shaft sleeve; 200-ferrule assembly; 201-positioning part; 202-stop portion; 203-grabbing part; 204-convex edge; 210-ferrule module; 211-ring; 212-flange; 220-ferrule; 230-housing; 231-first housing; 232-second housing; 233-connecting part; 234-sealing ring; 240-elastic member.

### DESCRIPTION OF EMBODIMENTS

To make the objectives, technical solutions, and advantages of this application clearer, the following further describes this application in detail with reference to the accompanying drawings.

The following terms "first", "second", and the like are merely intended for a purpose of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two.

In addition, in this application, position terms such as "upper", and "lower" are defined relative to an illustrative position of a component in the accompanying drawings. It should be understood that these direction terms are relative concepts and are used for relative description and clarification, and may vary accordingly depending on a position change in which components are placed in the accompanying drawings.

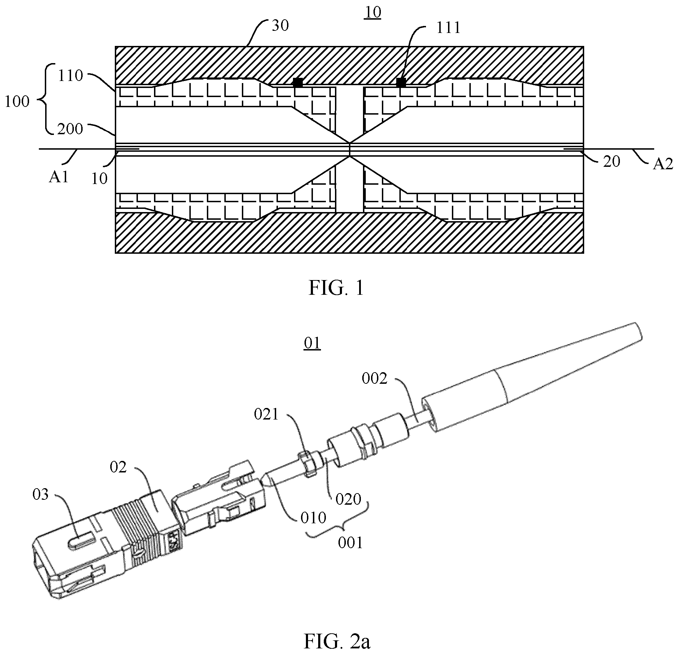

FIG. 1 is a diagram of a structure of an optical link according to an embodiment of this application. In FIG. 1, the optical link includes a transmit fiber 10, a receive fiber 20, an optical fiber adapter 30, and an optical fiber connector 100.

An end of the transmit fiber 10 is connected to the optical fiber connector 100. An end face of the transmit fiber 10 and an end face of the optical fiber connector 100 are coplanar.

Similarly, an end of the receive fiber 20 is connected to the optical fiber connector 100, and an end face of the receive fiber 20 and an end face of the optical fiber connector 100 are coplanar.

The optical fiber adapter 30 is of a cavity structure, and the cavity in the optical fiber adapter 30 runs through two opposite ends of the optical fiber adapter 30.

Two optical fiber connectors 100 extend into the cavity from the two ends of the optical fiber adapter 30 and are connected to the optical fiber adapter 30. In this way, the end face of the transmit fiber 10 abuts against the end face of the receive fiber 20, so that an optical signal output by the transmit fiber 10 may be coupled to the receive fiber 20.

When an axis A1 of the transmit fiber 10 overlaps an axis A2 of the receive fiber 20, an optical signal loss is small. In other words, the more the end face of the transmit fiber 10 overlaps the end face of the receive fiber 20, the smaller the optical signal loss.

In FIG. 1, the optical fiber connector 100 includes a frame sleeve 110 and a ferrule assembly 200. The frame sleeve 110 is sleeved on the ferrule assembly 200, and the ferrule assembly 200 is sleeved on the transmit fiber 10, or the ferrule assembly 200 is sleeved on the receive fiber 20. Frame sleeves 110 of two optical fiber connectors 100 are connected to the optical fiber adapter 30, so as to implement interconnection between the receive fiber 20 and the transmit fiber 10.

An identification part 111 is arranged on a surface of the frame sleeve 110. When two frame sleeves 110 are connected to the optical fiber adapter 30, the two frame sleeves 110 are aligned through observing or detecting relative positions of two identification parts 111 and the optical fiber adapter 30.

For example, after the two frame sleeves 110 are connected to the optical fiber adapter 30, the identification parts 111 on the surfaces of the two frame sleeves 110 are opposite. As relative positions of the identification parts 111 and ferrule assemblies 200 are fixed, after the two identification parts 111 are aligned, end faces of the ferrule assemblies 200 are aligned, and the receive fiber 20 and the transmit fiber 10 located in the two ferrule assemblies 200 are aligned.

In general, the ferrule assembly 200 has an inner bore, and the inner bore is for accommodating the receive fiber 20. After the receive fiber 20 extends into the inner bore, because a diameter of the inner bore is greater than an outer diameter of the receive fiber 20, an axis of the receive fiber 20 may deviate from an axis of the inner bore. Similarly, an axis of the transmit fiber 10 may also deviate from the axis of the inner bore, and the axis of the receive fiber 20 and the axis of the transmit fiber 10 deviate in different directions. In this way, even if the end faces of the two ferrule assemblies 200 completely overlap, the end face of the transmit fiber 10 rarely overlaps with the end face of the receive fiber 20 as the axis of the transmit fiber 10 deviates from the axis of the receive fiber 20, resulting in a loss of optical signals.

Then, there may be a manufacturing tolerance between the concentricity of the outer diameter of the ferrule assembly 200 and the inner bore of the ferrule assembly 200, causing the axis of the inner bore to deviate from the geometric center of the ferrule assembly 200. If an axis of an inner bore that accommodates the receive fiber 20 and an axis of an inner bore that accommodates the transmit fiber 10 deviate in different directions, when the two ferrule assemblies 200 are in an interconnected state, the axes of the inner bores of the two ferrule assemblies 200 do not overlap, which also results in a low degree of overlap between the end face of the transmit fiber 10 and the end face of the receive fiber 20, and causes an optical signal loss.

In addition, there may also be a manufacturing tolerance between the diameters of the inner bores of the two ferrule assemblies 200, or there may also be a manufacturing tolerance between the outer diameters of the transmit fiber 10 and the receive fiber 20. When the two ferrule assemblies 200 are in an interconnected state, the foregoing two tolerances may also reduce a degree of overlap between the end face of the transmit fiber 10 and the end face of the receive fiber 20, causing an optical signal loss.

FIG. 2a is a diagram of a structure of an end face of an optical fiber connector 01 in a related technology. In FIG. 2a, the optical fiber connector 01 includes a frame sleeve 02 and a ferrule module 001, and the frame sleeve 02 is sleeved on the ferrule module 001. A guiding part 03 is arranged on a surface that is of the frame sleeve 02 and that is away from the ferrule module 001, and the guiding part 03 is used to be connected to an optical fiber adapter.

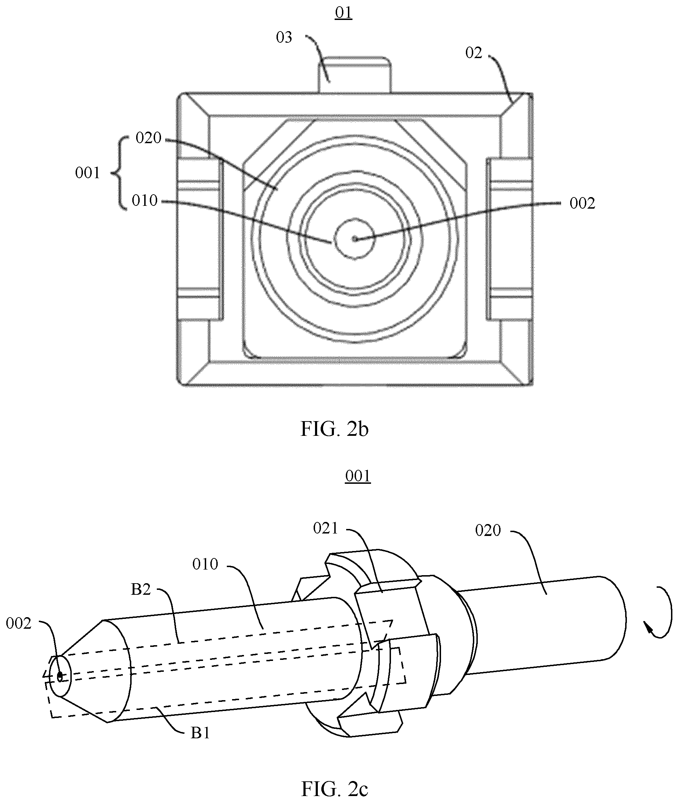

FIG. 2b is a diagram of a structure of the optical fiber connector 01 in the related technology and an optical fiber 002. In FIG. 2b, the ferrule module 001 is sleeved on the optical fiber 002 and connected to the optical fiber 002. FIG. 2c is a diagram of a structure of an end face of the optical fiber connector 01 in FIG. 2a. A paper plane of FIG. 2b is perpendicular to an axis of the ferrule module 001.

The ferrule module 001 includes a ferrule 010 and a flange 020. An end of the ferrule 010 extends into the flange 020 and is connected to the flange 020. The optical fiber 002 passes through the flange 020, extends into the ferrule 010, and is connected to the ferrule 010.

FIG. 2c is a diagram of a structure of the ferrule module 001 in the related technology. In FIG. 2c, four grooves 021 are arranged on an outer wall of the flange 020, and the grooves 021 are used to be connected to a frame sleeve. For example, the groove 021 is used to be indirectly connected to a frame sleeve.

During assembly, the optical fiber 002 extends into the ferrule 010 and is connected to the ferrule 010, a position at which an axis of the optical fiber 002 deviates from an axis of the ferrule 010 is detected, and the ferrule module 001 is rotated based on the position, so that one groove 021, the axis of the optical fiber 002, the axis of the ferrule 010, and the guiding part 03 are all in a same plane. Then, two ferrule modules 001 are interconnected, and end faces of the two optical fibers 002 highly overlap.

It can be learned that, when the frame sleeve 02 is connected to the ferrule module 001, one of the four grooves 021 may be selected to be coplanar with the guiding part 03, the axis of the optical fiber 002, and the axis of the ferrule 010, so that the two optical fibers 002 are well interconnected when the two ferrule modules 001 are interconnected.

In FIG. 2c, because the quantity of grooves 021 is limited, the axis of the optical fiber 002, the axis of the groove 021, and the axis of the ferrule 010 may not be coplanar. For example, the axis of the optical fiber 002 and the axis of the ferrule 010 are in a B2 plane. Both the axis of the ferrule 010 and the guiding part 03 are in a B1 plane.

Apparently, the B1 plane and the B2 plane may overlap or intersect.

In an example in which the B1 plane and the B2 plane intersect, when two ferrule modules 001 are interconnected, B1 planes of the two ferrule modules 001 overlap, and there is an included angle between B2 planes of the two ferrule modules 001.

For example, when there are only four grooves 021, for example, an included angle between the B1 plane and the B2 plane of a ferrule module 001 is 45°. An included angle between the B1 plane and the B2 plane of another ferrule module 001 is -45°. When two ferrule modules 001 are interconnected, an included angle between B2 planes of the two ferrule modules 001 is 90°. In this way, a degree of overlap between the two optical fibers 002 is relatively low, and a problem of a large loss still exists.

Therefore, an embodiment of this application provides an optical fiber connector 100, to resolve a problem of a large loss caused by a low overlap degree of two optical fibers when the two optical fibers are interconnected.

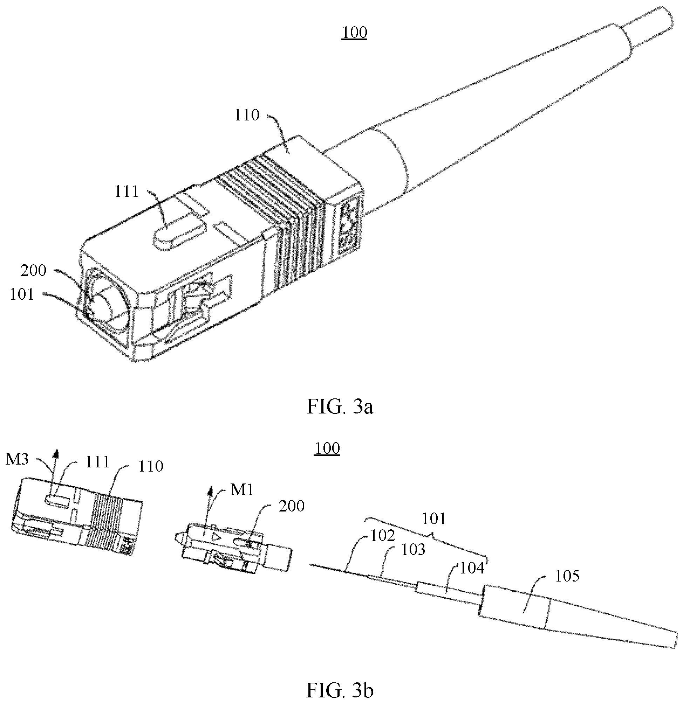

FIG. 3a is a diagram of a structure of an optical fiber connector 100 according to an embodiment of this application. FIG. 3b is a diagram of an exploded structure of the optical fiber connector 100 shown in FIG. 3a. In FIG. 3a and FIG. 3b, the optical fiber connector 100 includes a frame sleeve 110 and a ferrule assembly 200, and the frame sleeve 110 is sleeved on the ferrule assembly 200.

The frame sleeve 110 is used to be connected to the optical fiber adapter 30. A structure of the frame sleeve 110 is not limited in this embodiment of this application. For example, a shape of the frame sleeve 110 is set based on a type of the optical fiber connector 100.

For example, the type of the optical fiber connector 100 may be an FC (ferrule connector) connector, an SC (square connector) optical fiber connector, a biconic (biconic connector) connector, an MU (miniature unit coupling) connector, an LC (lucent connector) optical fiber connector, or the like. For example, the optical fiber connector 100 shown in FIG. 3a is the SC optical fiber connector.

It may be understood that the optical fiber connector 100 may not be a standard component, as long as the two optical fiber connectors 100 can be inserted into the optical fiber adapter 30 and interconnected. For example, the optical fiber connector 100 is a waterproof optical fiber connector.

The ferrule assembly 200 is used to be connected to an end of an optical fiber 101.

A type of the optical fiber 101 is not limited in this embodiment of this application. For example, the optical fiber 101 may be a receive fiber 20, or may be a transmit fiber 10.

In FIG. 3b, the optical fiber 101 includes a bare optical fiber 102, a coating layer 103, and an outer part 104. The bare optical fiber 102 is buried in the coating layer 103, the coating layer 103 is buried in the outer part 104, a part that is of the bare optical fiber 102 and that is near an end is exposed outside the coating layer 103, and a part of the coating layer 103 is exposed outside the outer part 104. In some examples, the outer part 104 may be referred to as a protective case.

Generally, a part of the bare optical fiber 102 exposed outside the coating layer 103 and a part of the coating layer 103 exposed outside the outer part 104 are connected to the ferrule assembly 200. When two ferrule assemblies 200 are interconnected, two bare optical fibers 102 are opposite. Even if a co-axiality tolerance between the coating layer 103 and the bare optical fiber 102 is large, interconnection between the two bare optical fibers 102 may not be affected.

A structure of a side that is of the frame sleeve 110 and that is away from the ferrule assembly 200 is not limited in this embodiment of this application, and is set based on a structure of the optical fiber adapter 30.

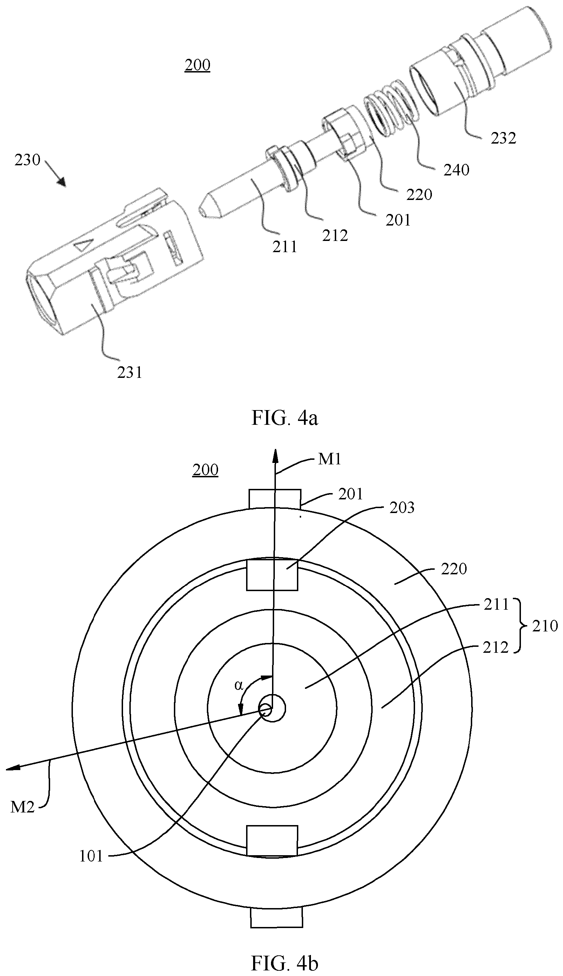

FIG. 4a is a diagram of a structure of the ferrule assembly 200 according to an embodiment of this application. In FIG. 4a, the ferrule assembly 200 includes a ferrule module 210 and a ring 220, and the ring 220 is sleeved on the ferrule module 210.

The ferrule module 210 is connected to an end of an optical fiber 101, and the ferrule module 210 is sleeved on the optical fiber 101.

The ring 220 is rotatable relative to the ferrule module 210, and the ring 220 is connected to the ferrule module 210. For example, before the ring 220 is connected to the ferrule module 210, the ring 220 is rotatable relative to the ferrule module 210. In addition, the ring 220 may be connected to the ferrule module 210 by rotating by any angle relative to the ferrule module 210.

FIG. 4b is a diagram of a structure of an end face of a ferrule assembly 200 according to an embodiment of this application. A paper plane of FIG. 4b is perpendicular to an axis of the ferrule module 210.

A positioning part 201 is arranged on a surface of a ring 220, the positioning part 201 positions the optical fiber 101, and the positioning part 201 may be a positioning groove, a positioning mark, or a positioning protrusion.

Because the ring 220 is rotatable relative to the ferrule module 210, the positioning part 201 is located on the surface of the ring 220. The ring 220 may be rotated based on a position of the optical fiber 101 in the ferrule module 210, so that the positioning part 201 and the optical fiber 101 may have a determined position relationship. In this way, when two ferrule assemblies 200 are inserted into the optical fiber adapter 30 to enable two ferrule modules 210 to be in an interconnected state, positioning parts 201 of the two ferrule assemblies 200 are opposite. Axes of optical fibers 101 in the two ferrule assemblies 200 are opposite. Axes of the two optical fibers 101 are collinear, end faces of the two optical fibers 101 highly overlap, and an optical signal loss is small.

For example, that the positioning part 201 positions the optical fiber 101 includes: The positioning part 201 indicates a position of the optical fiber 101 in the ferrule module 210, or the positioning part 201 indicates a direction in which the optical fiber 101 deviates from the ferrule module 210.

A manner in which the positioning part 201 positions the optical fiber 101 is not limited in this embodiment of this application. For example, the positioning part 201 positions or indicates a direction in which the optical fiber 101 deviates from an axis of the ferrule module 210. For example, the positioning part 201, the axis of the optical fiber 101, and the axis of the ferrule module 210 are enabled to have a relatively determined position relationship.

In FIG. 4b, a direction in which the positioning part 201 deviates from the axis of the ferrule module 210 is an M1 direction, and a direction in which the optical fiber 101 deviates from the axis of the ferrule module 210 is an M2 direction. An included angle between the M1 direction and the M2 direction is a first preset angle α.

The axis of the ferrule module 210 is an axis of an outer diameter axis of the ferrule module 210.

The M1 direction is a direction from the axis of the ferrule module 210 to the positioning part 201.

The M2 direction is a direction from the axis of the ferrule module 210 to the axis of the optical fiber 101. For example, the M2 direction is a direction from the outer diameter axis of the ferrule module 210 to an axis of the bare optical fiber 102.

Because the ring 220 is rotatable relative to the ferrule module 210, the positioning part 201 is located on a surface of the ring 220. The ring 220 may be rotated based on a direction in which the optical fiber 101 deviates from the axis of the ferrule module 210, so that an included angle between the direction in which the positioning part 201 deviates from the axis of the ferrule module 210 and the direction in which the optical fiber 101 deviates from the axis of the ferrule module 210 is the first preset angle α.

When an included angle between the M1 direction and the M2 direction of each of the two ferrule assemblies 200 is the first preset angle α, when the two ferrule assemblies 200 are inserted into the optical fiber adapter 30 to enable the two ferrule modules 210 to be in an interconnected state, positioning parts 201 of the two ferrule assemblies 200 are opposite. The axes of the optical fibers 101 will be opposite, and the overlap of the end faces of the two optical fibers 101 is high.

In addition, as the M1 direction is a direction from the outer diameter axis of the ferrule module 210 to the axis of the optical fiber 101, even if an axis of an inner bore in the ferrule module 210 deviates from an outer diameter axis of the ferrule module 210, the axis of the optical fiber 101 located in the inner bore may also be positioned by the positioning part 201. In this way, in this embodiment of this application, an optical signal loss caused when the axis of the inner bore of the ferrule module 210 deviates from the outer diameter axis of the ferrule module 210 can also be reduced.

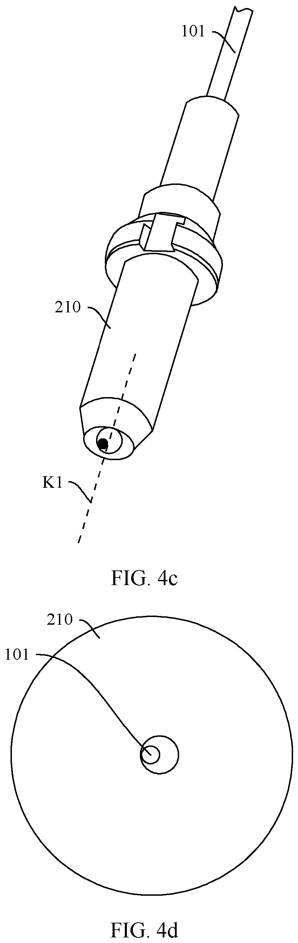

FIG. 4c is a diagram of a structure of an optical fiber 101 and a ferrule module 210 according to an embodiment of this application. FIG. 4d is a diagram of a structure of an end face of the optical fiber 101 and an end face of the ferrule module 210 shown in FIG. 4b. A paper plane of FIG. 4d is perpendicular to the axis of the ferrule module 210. In FIG. 4c and FIG. 4d, because a diameter of the inner bore of the ferrule module 210 is greater than an outer diameter of the optical fiber 101, after the optical fiber 101 is connected to the ferrule module 210, the optical fiber 101 deviates from the inner bore of the ferrule module 210.

In FIG. 4d, the axis of the optical fiber 101 deviates from an outer diameter axis K1 of the ferrule module 210.

Because the positioning part 201 in this application can position the optical fiber 101, apparently, regardless of a location relationship between the axis of the optical fiber 101 and the outer diameter axis K1 of the ferrule module 210, the positioning part 201 can position the optical fiber 101.

The foregoing axis of the optical fiber 101 is not limited to a collinearity in a geometric sense, and a distance between axes of two optical fibers 101 may be within an allowed error range. For example, when two interconnected optical fibers 101 deviate from the ferrule module 210 in a same direction, because a diameter of the inner bore of the ferrule module 210 is greater than a diameter of the optical fiber 101, distances between axes of the two optical fibers 101 and the axis of the ferrule module 210 vary, there is a distance between the axes of the two optical fibers 101. In this case, the axes of the foregoing two optical fibers 101 are colinear.

That the positioning parts 201 of the two ferrule assemblies 200 are opposite means that: Projections of the two positioning parts 201 overlap along an insertion direction of the ferrule assemblies 200.

A method for obtaining the M2 direction is not limited in this embodiment of this application. For example, a centering device is used to rotate the ferrule module 210 for a circle in a case of light transmission, to obtain a moving track of a light spot of the optical fiber 101, so that an eccentricity and an eccentric position of the optical fiber 101 relative to an outer diameter axis of the ferrule module 210 may be obtained.

A size of the foregoing first preset angle α is not limited in this embodiment of this application.

Because the first preset angles α of the two ferrule assemblies 200 are equal, when the two ferrule assemblies 200 are in an interconnected state, the positioning parts 201 of the two ferrule assemblies 200 are opposite to each other, and are opposite to a center of the optical fiber 101 connected to the two ferrule assemblies 200. Apparently, the first preset angle α may be any value. For example, a size of the first preset angle α may be 0°, 20°, 30°, 90°, 100°, 150°, 180°, 200°, 270°, 300°, 350°, 360°, or the like.

The positioning part 201 is configured to calibrate a position of the optical fiber 101 in the ferrule assembly 200. A shape or a size of the positioning part 201 is not limited in this embodiment of this application. For example, the positioning part 201 may be a point, a line, a plane, or a body.

For example, in an embodiment in which the positioning part 201 is of a body structure, a direction in which the positioning part 201 deviates from the axis of the ferrule module 210 may be: a direction from the axis of the ferrule module 210 to any other part such as a middle part of the positioning part 201 or an end of the positioning part 201. This is because a size of the first preset angle is not limited in this embodiment of this application.

A structure of the positioning part 201 is not limited in this embodiment of this application. For example, the positioning part 201 may be a coating, a protrusion, a groove, or the like. Alternatively, the positioning part 201 may be a component on a surface of the ring 220, and the component is used to be connected to another component such as the frame sleeve 110, so that the positioning part 201 has both functions of identification and connection.

In some embodiments, the first preset angle is 0°, that is, the axis of the optical fiber 101, the positioning part 201, and the axis of the ferrule module 210 are coplanar. In other words, the M1 direction and the M2 direction overlap. In this way, in a detection process, a direction in which the positioning part 201 deviates from the axis of the ferrule module 210 and a direction in which the optical fiber 101 deviates from the axis of the ferrule module 210 do not need to be separately detected. In this way, detection steps are omitted, and assembly costs are reduced.

Similarly, in an embodiment in which the axis of the optical fiber 101, the positioning part 201, and the axis of the ferrule module 210 are coplanar, the axis of the optical fiber 101 and the axis of the ferrule module 210 are located in a same plane, and any position of the positioning part 201 may be located in the plane. For example, a center of the positioning part 201 or an end of the positioning part 201 are located in the plane.

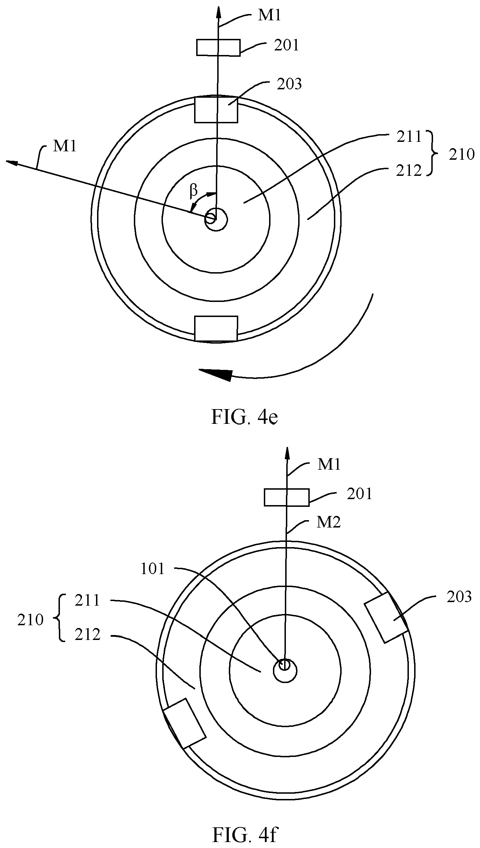

FIG. 4e is a diagram of a state of a ferrule module 210 and a positioning part 201 according to an embodiment of this application. In FIG. 4e, an axis of an optical fiber 101, the positioning part 201, and an axis of the ferrule module 210 are not in a same plane, and an included angle between an M1 direction and an M2 direction is β. To make the axis of the optical fiber 101, the positioning part 201, and the axis of the ferrule module 210 coplanar, the ferrule module 210 and the positioning part 201 need to rotate relative to each other.

FIG. 4f is a diagram of a state presented when the ferrule module 210 and the positioning part 201 in FIG. 4e rotate relatively. For example, after the ferrule module 210 in FIG. 4e rotates clockwise by an angle β, a diagram of a state shown in FIG. 4f may be obtained. In FIG. 4f, the M1 direction and the M2 direction overlap, and the axis of the optical fiber 101, the positioning part 201, and the axis of the ferrule module 210 are coplanar.

In this way, a relative position of the positioning part 201 and the optical fiber 101 may be adjusted by rotating the ferrule module 210 and the positioning part 201 relative to each other, so that the positioning part 201 and the optical fiber 101 may reach a preset position relationship. When the positioning parts 201 and the optical fibers 101 in the two ferrule assemblies 200 have a same position relationship, after the two ferrule assemblies 200 are interconnected, a degree of overlap between end faces of the two optical fibers 101 is high.

It may be understood that a direction and an angle of relative rotation of the ferrule module 210 and the positioning part 201 are not limited in this embodiment of this application. For example, in FIG. 4e, a diagram of a state shown in FIG. 4f may also be obtained by rotating the ferrule module 210 by an angle of (360° - β) in a counterclockwise direction.

A location of the positioning part 201 is not limited in this embodiment of this application. For example, in a process of rotating the ring 220 and the ferrule module 210, the positioning part 201 is at a location easy to be observed.

**In** an example in FIG. 4b, the positioning part 201 is located on an outer circumferential surface of the ring 220. For example, the positioning part 201 is located on a surface that is of the ring 220 and that is away from the ferrule module 210. For example, the positioning part 201 extends along an axis direction of the ring 220. In a process in which the ring 220 and the ferrule module 210 rotate relative to each other, a position relationship between the positioning part 201, the axis of the optical fiber 101, and the axis of the ferrule module 210 is easy to be observed. In addition, in a process in which the ferrule assembly 200 is connected to the frame sleeve 110, a relative position relationship between the positioning part 201 and the frame sleeve 110 is easy to be observed.

In some embodiments of this application, the positioning part 201 is located on an end face of the ring 220. For example, the positioning part 201 is located on an end face of the ring 220 along the axis direction of the ring 220. For example, the positioning part 201 extends along the axis direction of the ring 220. Similarly, in a process of rotating the ring 220, a position relationship between the positioning part 201, the axis of the optical fiber 101, and the axis of the ferrule module 210 is easy to be observed.

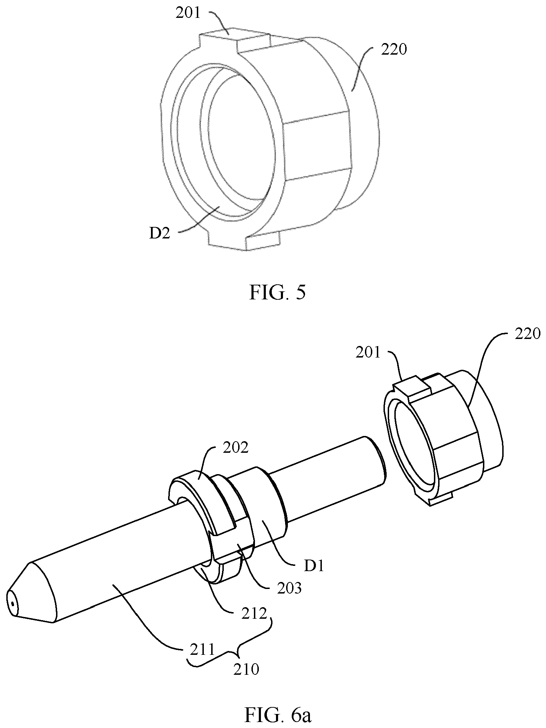

FIG. 5 is a diagram of a structure of a ring 220 according to an embodiment of this application. In FIG. 5, the ring 220 is of an annular structure.

A material of the ring 220 is not limited in this embodiment of this application. For example, the material of the ring 220 may be plastic or metal.

An inner circumferential surface of the ring 220 is a circle. In this way, regardless of any angle by which the ferrule module 210 rotates relative to the ring 220, the ring 220 can be connected to the ferrule module 210.

In another embodiment, an inner circumferential surface of the ring 220 may alternatively be in another shape. For example, the inner circumferential surface is in a tooth shape, and the ring 220 is engaged with the ferrule module 210. Similarly, regardless of any angle by which the ferrule module 210 rotates relative to the ring 220, the ring 220 can be connected to the ferrule module 210.

In FIG. 5, the positioning part 201 is a convex part, and the positioning part 201 is convexly arranged on an outer circumferential surface of the ring 220. An arrangement of the convex part may not weaken mechanical strength of the ring 220.

The convex part is used to be connected to the frame sleeve 110. For example, a groove matching the convex part is arranged on the frame sleeve 110.

In this way, the positioning part 201 has a function of indicating the optical fiber 101 and connecting to the frame sleeve 110. Components of the frame sleeve 110 may not be additionally arranged, thereby saving costs.

In some embodiments, a plurality of convex parts may be arranged on a surface of the ring 220, and one of the convex parts is used as the positioning part 201. The plurality of convex parts are all connected to the frame sleeve 110. In this way, connection strength between the ring 220 and the frame sleeve 110 may be increased.

In another embodiment of this application, the positioning part 201 may be a groove, and a convex part matching the groove is arranged on the frame sleeve 110. Similarly, the positioning part 201 also has a function of indicating the optical fiber 101 and connecting to the frame sleeve 110.

A connection manner of the ring 220 and the ferrule module 210 is not limited in this embodiment of this application. For example, the ring 220 and the ferrule module 210 are in interference fit. The interference fit means that connection may be implemented without using another auxiliary connection structure, so that costs can be reduced and an assembly process can be reduced.

For example, a size of the ferrule module 210 in at least one direction is greater than an inner diameter of the ring 220, and the ring 220 and the ferrule module 210 may be in interference fit.

In this way, a shape of a part that is of the ferrule module 210 and that is used to be connected to the ring 220 is not limited. For example, the part may be a circle, or may have a structure such as a flange. A size of the ferrule module 210 in a convex direction of the flange is greater than the inner diameter of the ring 220, so that interference fit between the ring 220 and the ferrule module 210 can be implemented.

In another embodiment of this application, the ring 220 and the ferrule module 210 may be connected in a manner of bonding, welding, or the like.

In an embodiment in which the inner circumferential surface of the ring 220 is a circle, the ring 220 and the ferrule module 210 are also applicable to a connection manner such as bonding and welding. The ring 220 may be connected to the ferrule module 210 by rotating by any angle relative to the ferrule module 210.

A structure of the ferrule module 210 is not limited in this embodiment of this application.

FIG. 6a is a diagram of a structure of a ferrule module 210 and a ring 220 according to an embodiment of this application. In FIG. 6a, the ferrule module 210 includes a ferrule 211 and a flange 212, and the flange 212 is sleeved on the ferrule 211.

An end of the ferrule 211 extends into the flange 212 and is connected to the flange 212, the ring 220 is sleeved on the flange 212, and the ring 220 is rotatable relative to the flange 212.

An axis of the ferrule module 210 is an outer diameter axis of the ferrule 211. When two ferrule modules 210 are in an interconnected state, end faces of the two ferrules 211 are in an interconnected state.

In some embodiments, an end face of the ferrule 211 protrudes from an end face of the flange 212. In other words, an end of the ferrule 211 is exposed outside the flange 212. An end exposed outside the flange 212 is a free end. An end opposite to the free end extends into the flange 212 and is connected to the flange 212. In this way, when free ends of two ferrule modules 210 are in an interconnected state, end faces of two ferrules 211 protruding from the flange 212 are interconnected to each other, and the two ferrules 211 are easy to be aligned.

A connection manner of the ferrule 211 and the flange 212 is not limited in this embodiment of this application. For example, the flange 212 and the ferrule 211 are in interference fit.

A material of the ferrule 211 is not limited in this embodiment of this application. For example, the material of the ferrule 211 is ceramic.

A material of the flange 212 is not limited in this embodiment of this application. For example, the material of the flange 212 may be metal or plastic.

The flange 212 is sleeved on the optical fiber 101 and is connected to the optical fiber 101. The ferrule 211 is sleeved on the optical fiber 101 and is connected to a free end of the optical fiber 101.

A shape of the ferrule 211 is not limited in this embodiment of this application. In FIG. 6a, the ferrule 211 is of a tubular structure, an end of the ferrule 211 is of a round table shape, an end face of the ferrule 211 is of an annular shape, and an axis of the ferrule module 210 passes through a center of an excircle of the annular ring.

A shape of the flange 212 is not limited in this embodiment of this application. In FIG. 6a, a surface of the flange 212 opposite to the ring 220 is a circumferential surface with a variable diameter. In other words, an outer surface of the flange 212 is a D1 step surface.

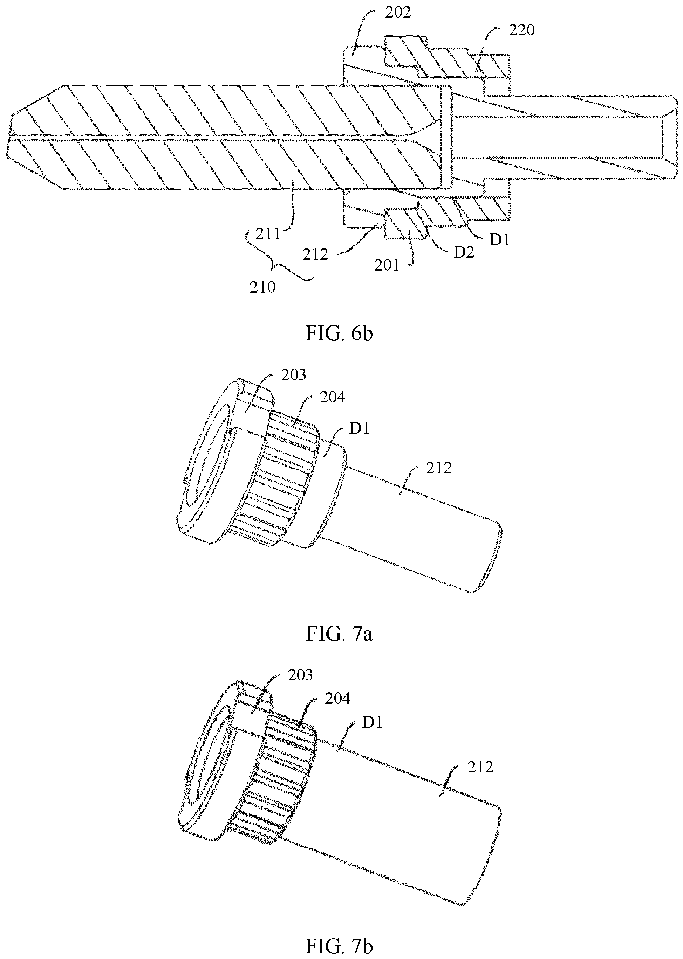

FIG. 6b is a diagram of an internal structure of a ferrule module 210 and a ring 220 according to an embodiment of this application. In FIG. 6b, a surface of the ring 220 opposite to a flange 212 is a circumferential surface with a variable diameter, and an inner surface of the ring 220 is a D2 step surface. When the ring 220 and the flange 212 are in a connected state, the D1 step surface is connected to the D2 step surface. In this way, connection strength between the ring 220 and the flange 212 is relatively high.

A quantity of steps of the D1 step surface and the D2 step surface is not limited in this embodiment of this application. For example, the quantity of steps may be one, two, or more.

FIG. 7a is a diagram of a structure of a flange 212 according to an embodiment of this application. In FIG. 7a, a D1 step surface of the flange 212 has two steps. The D1 step surface is composed of three circumferential surfaces with different diameters.

Correspondingly, the D2 step surface matching the D1 step surface may be arranged on an inner surface of the ring 220.

FIG. 7b is a diagram of a structure of another flange 212 according to an embodiment of this application. In FIG. 7b, a D1 step surface of the flange 212 has one step. The D1 step surface is composed of two circumferential surfaces with different diameters.

In another embodiment of this application, an outer surface of the flange 212 may be a circumferential surface with a uniform diameter, which is not limited in this embodiment of this application.

**In** FIG. 6a and FIG. 6b, a stop portion 202 is arranged at an end of the flange 212, and when the ring 220 and the flange 212 are in a connected state, the stop portion 202 abuts against the ring 220. The stop portion 202 is close to a free end of the ferrule 211.

In this way, the stop portion 202 can avoid an excessively large movement distance of the ring 220 in a process of connecting the ring 220 to the flange 212. For example, in a process in which the flange 212 extends into the ring 220, the stop portion 202 has a function of indicating whether a relative movement of the flange 212 and the ring 220 reaches a preset position. In addition, the stop portion 202 further has a function of preventing the ring 220 from being detached from the flange 212.

A structure of the stop portion 202 is not limited in this embodiment of this application. For example, the stop portion 202 may be of an annular structure, and the annular structure is annularly arranged at an end of the flange 212. The foregoing annular structure may be an open-loop structure or a closed-loop structure.

In FIG. 6a, a surface of the flange 212 has a grabbing part 203. The grabbing part 203 is used as a point of strength when the ferrule module 210 and the ring 220 are rotated.

In other words, in a process of rotating the ferrule module 210 and the ring 220, the grabbing part 203 may provide a point of strength for grabbing the ferrule module 210, so that the ferrule module 210 and the ring 220 can rotate relatively.

A structure of the grabbing part 203 is not limited in this embodiment of this application. For example, the grabbing part 203 may be a structure such as a groove or a convex part.

A position of the grabbing part 203 on the flange 212 is not limited in this embodiment of this application. For example, when the ring 220 and the flange 212 are in a connected state, the grabbing part 203 may be located in an area that is of the flange 212 and that is not covered by the ring 220 and not covered by the ferrule 211.

It may be understood that, in some embodiments, the grabbing part 203 may be located on a surface of the ferrule 211. For example, the grabbing part 203 is located in an area that is of the ferrule 211 and that is not covered by the flange 212.

Still in FIG. 7a and FIG. 7b, it can be learned that a part of an area of the D1 step surface of the flange 212 is a rough surface.

In an embodiment in which the flange 212 and the ring 220 are in interference fit, the rough surface may increase friction when the flange 212 is connected to the ring 220, and increase connection strength of the flange 212 and the ring 220.

It may be understood that some areas of the outer surface of the flange 212 may be rough surfaces, or all areas may be rough surfaces. For example, the rough surface may cover only a part of a circumferential area of the flange 212, or may cover all areas of the circumferential area of the flange 212.

A structure of the rough surface is not limited in this embodiment of this application. For example, a plurality of convex edges 204 are arranged on the rough surface, and the convex edges 204 extend along an axial direction of the flange 212. In this way, when the flange 212 and the ring 220 are in a connected state, relative rotation of the flange 212 and the ring 220 may be avoided.

Still in FIG. 6b, a diameter of an inner bore of the flange 212 is greater than a diameter of an inner bore of the ferrule 211.

As described above, the bare optical fiber 102 is buried in the coating layer 103. Apparently, an outer diameter of the coating layer 103 is greater than an outer diameter of the bare optical fiber 102.

In this example, the coating layer 103 in which the bare optical fiber 102 is buried extends into the flange 212 and is connected to the flange 212. The bare optical fiber 102 exposed outside the coating layer 103 extends into the ferrule 211 and is connected to the ferrule 211.

A connection manner of the flange 212 and the coating layer 103 is not limited in this embodiment of this application, for example, through adhesive bonding.

Similarly, a connection manner of the ferrule 211 and the bare optical fiber 102 is not limited in this embodiment of this application, for example, through adhesive bonding.

Still in FIG. 3b, in some embodiments of this application, the ferrule module 210 further includes a tail sheath 105. The tail sheath 105 is sleeved on the outer part 104, and the tail sheath 105 is connected to the outer part 104.

The tail sheath 105 is connected to an end of the ferrule module 210, and free ends of the tail sheath 105 and the ferrule 211 are respectively located at two ends of the flange 212 along an axis direction.

The tail sheath 105 may prevent the optical fiber 101 from being bent. For example, when the optical fiber 101 exposed on the surface of the ferrule module 210 and the ferrule module 210 have an angle of 90°, the tail sheath 105 can buffer stress and load of the optical fiber 101 at a corner, to avoid an excessively large loss of the optical fiber 101 or damage to the optical fiber 101.

A material of the tail sheath 105 is not limited in this embodiment of this application. For example, the material of the tail sheath 105 may be a flexible material such as metal, rubber, or plastic.

A connection manner of the tail sheath 105 and the coating layer 103 is not limited in this embodiment of this application, for example, through adhesive bonding.

A connection manner of the tail sheath 105 and the flange 212 is not limited in this embodiment of this application, for example, through interference fit, bonding, clamping, or welding.

Still in FIG. 4a, in some embodiments, the ferrule assembly 200 further includes an elastic member 240, and the elastic member 240 is elastically connected to the ring 220 or the ferrule module 210.

The elastic member 240 is used to apply a force same as an insertion direction of the ferrule assembly 200 to the ferrule module 210. In this way, when the free ends of the two ferrule assemblies 200 are in an interconnected state, the elastic members 240 of the two ferrule assemblies 200 make the two ferrule assemblies 200 tend to approach each other, so that a pressing force between the free ends of the two ferrule assemblies 200 is greater, and the pressing state is steadier.

A structure of the elastic member 240 is not limited in this embodiment of this application. For example, the elastic member 240 may be a spring.

In FIG. 4a, the ferrule assembly 200 further includes a housing 230.

Both the ferrule module 210 and the ring 220 are located in the housing 230. The housing 230 is connected to the frame sleeve 110.

In an embodiment in which the positioning part 201 has a function of positioning the optical fiber 101 and connecting to the frame sleeve 110, the ring 220 is connected to the housing 230 through the positioning part 201, and the positioning part 201 is connected to the frame sleeve 110 through the housing 230.

The housing 230 includes a first housing 231 and a second housing 232, an end of the second housing 232 extends into the first housing 231, and the first housing 231 and the second housing 232 are detachably connected.

The tail sheath 105 is connected to the second housing 232.

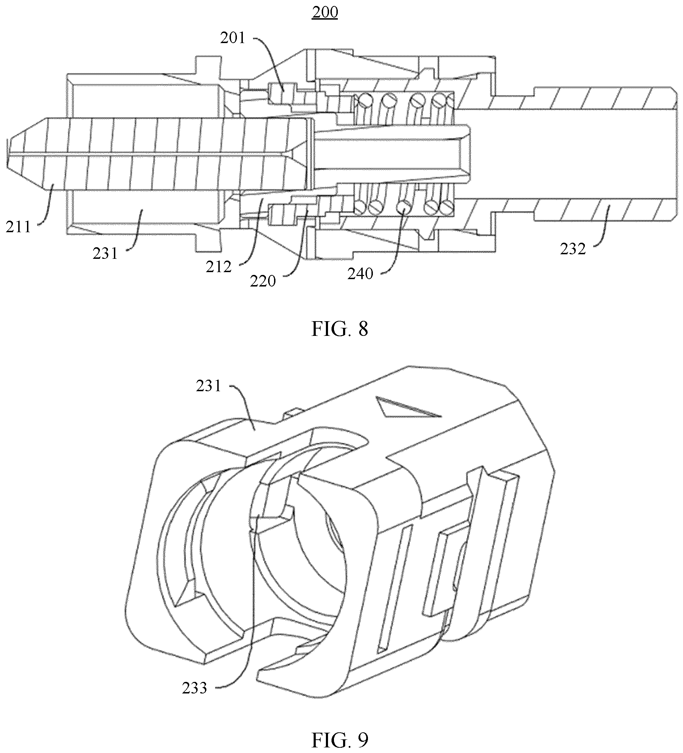

FIG. 8 is a diagram of an internal structure of the ferrule assembly 200 according to an embodiment of this application. In FIG. 8, an end that is of the flange 212 and that is away from the stop portion 202 extends into the second housing 232.

The second housing 232 is sleeved on the ring 220, and the second housing 232 is connected to the ring 220 through the elastic member 240.

The first housing 231 is sleeved on the ferrule 211 and is connected to the ferrule 211. The first housing 231 is connected to the frame sleeve 110.

For example, the ring 220 is connected to the first housing 231. For example, the ring 220 is connected to the first housing 231 through the positioning part 201.

In some embodiments, the positioning part 201 may not be connected to the first housing 231, and the ring 220 may alternatively be connected to the first housing 231 through another connective kit.

In some other embodiments, the ring 220 is connected to the first housing 231 through a plurality of connective kits, and one of the connective kits is the positioning part 201. For example, the plurality of connective kits are distributed in a circumferential array of the ring 220.

In this way, the ring 220 and the first housing 231 have a plurality of connection points. When the ring 220 and the first housing 231 are in a connected state, the ring 220 and the first housing 231 are not easy to rotate relative to each other, one of the connective kits may be the positioning part 201, and no additional positioning part 201 needs to be arranged.

Structures of the first housing 231 and the second housing 232 are not limited in this embodiment of this application. The structures of the first housing 231 and the second housing 232 are arranged based on a shape of the optical fiber adapter 30.

FIG. 9 is a diagram of a structure of the first housing 231 shown in FIG. 8. In FIG. 9, the first housing 231 has a connecting part 233, and the connecting part 233 is used to be connected to the ring 220.

The connecting part 233 in FIG. 9 is a groove. The groove is connected to the positioning part 201 on the ring 220.

In another embodiment, the connecting part 233 may be of another structure, and is arranged based on a connection manner of the first housing 231 and the ring 220. For example, the connecting part 233 may be a convex part, and the convex part is connected to a groove on the ring 220.

Still in FIG. 3a, in an example in FIG. 3a, an identification part 111 is arranged on a surface of the frame sleeve 110.

When the frame sleeve 110 and the ferrule assembly 200 are in a connected state, an included angle between an M1 direction in which the positioning part 201 deviates from the axis of the ferrule module 210 and an M3 direction in which the identification part 111 deviates from the axis of the ferrule module 210 is a second preset angle. In other words, a determined location relationship exists among the positioning part 201, the axis of the ferrule module 210, and the identification part 111.

When two ferrule assemblies 200 are inserted into the optical fiber adapter 30 to enable free ends of two ferrule modules 210 to be in an interconnected state, the identification parts 111 of the two ferrule assemblies 200 are opposite.

The M3 direction is a direction from an outer diameter axis of the ferrule module 210 to the identification part 111.

Similarly, a direction in which the identification part 111 deviates from the axis of the ferrule module 210 may be a direction from an outer diameter axis of the ferrule module 210 to any location of the identification part 111, for example, a center of the identification part 111 or an end of the identification part 111.

A size of the second preset angle is not limited in this embodiment of this application. For example, the size of the second preset angle may be 0°, 20°, 30°, 90°, 100°, 150°, 180°, 200°, 270°, 300°, 350°, or the like.

For example, in FIG. 3b, the second preset angle may be 0°. In this way, the center of the positioning part 201, the axis of the ferrule module 210, and the identification part 111 are coplanar. The M1 direction is parallel to the M2 direction.

In this way, in a process of connecting the optical fiber adapter 30 and the optical fiber connector 100, relative positions of the identification part 111 and the optical fiber adapter 30 may be observed or detected. If identification parts 111 of two ferrule assemblies 200 are aligned, it indicates that two positioning parts 201 are aligned, and further, axes of two optical fibers 101 are aligned.

In some embodiments, the identification part 111 may be a component that is used to be connected to the optical fiber adapter 30 and that is of the frame sleeve 110. For example, in FIG. 3a, the optical fiber connector 100 is an SC optical fiber connector, and the identification part 111 is a guide key K key (guide key) on a surface of the SC optical fiber connector.

In some other embodiments, the identification part 111 may not have a function of connecting to the optical fiber adapter 30. For example, the identification part may be a structure, such as a point, a line, a plane, or a body, arranged for an identification function, or may alternatively be a part on the frame sleeve 110.

As described above, because structures of the frame sleeve 110 and the housing 230 are related to a type of the optical fiber connector 100, the structure of the frame sleeve 110 may be arranged based on a type of the optical fiber connector 100. Correspondingly, the identification part 111 located on the surface of the frame sleeve 110 may alternatively be arranged based on the type of the optical fiber connector 100.

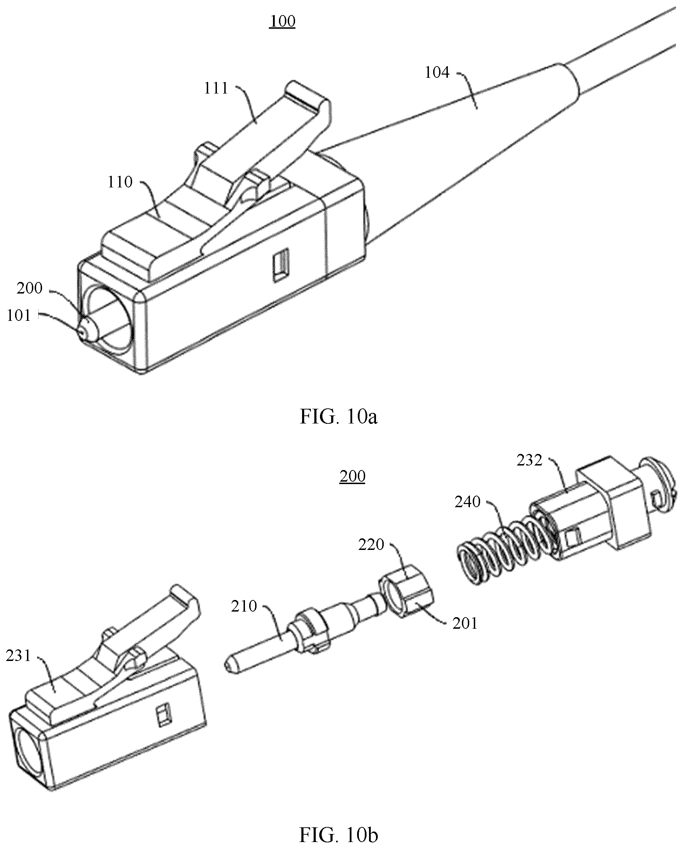

FIG. 10a is a diagram of a structure of another optical fiber connector 100 according to an embodiment of this application. FIG. 10b is a diagram of a structure of the ferrule assembly 200 in the optical fiber connector 100 in FIG. 10a. The optical fiber connector 100 in FIG. 10a is an LC optical fiber connector.

A frame sleeve and a housing of the LC optical fiber connector are integrally formed. In other words, the LC optical fiber connector may not be additionally provided with a frame sleeve, and the housing is connected to the optical fiber adapter 30.

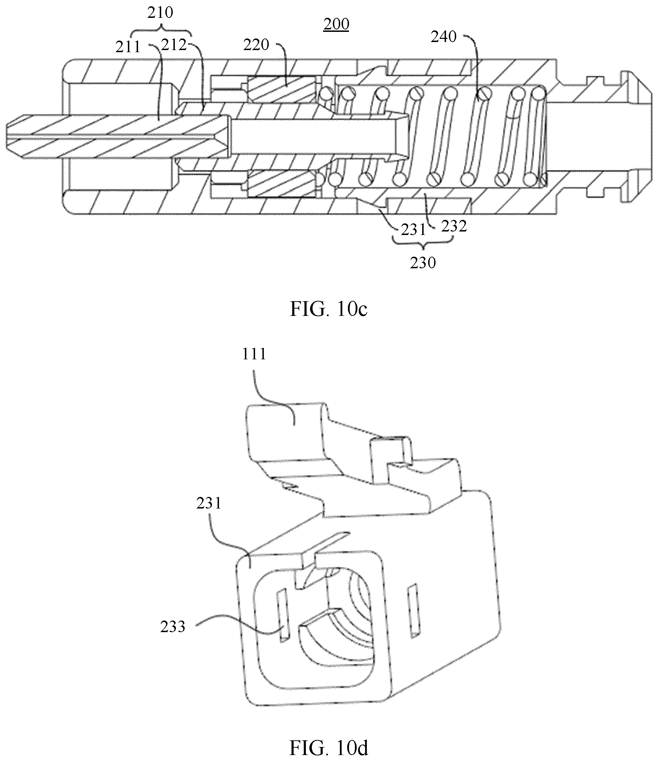

FIG. 10c is a diagram of an internal structure of the ferrule assembly 200 in FIG. 10a. In FIG. 10c, the housing 230 includes a first housing 231 and a second housing 232.

The first housing 231 is connected to the optical fiber adapter 30.

For a connection manner of the first housing 231 and the ferrule module 210 and the ring 220, refer to descriptions of the example shown in FIG. 3a. For a connection manner of the second housing 232 and the ferrule module 210 and the ring 220, refer to descriptions of the example shown in FIG. 3a. Details are not described herein.

FIG. 10d is a diagram of a structure of the first housing 231 in the optical fiber connector 100 in FIG. 10a. In FIG. 10d, the first housing 231 has a connecting part 233, and the connecting part 233 is used to be connected to the ring 220.

Similarly, for a structure of the connecting part 233, refer to related descriptions of the example shown in FIG. 9.

In FIG. 10d, the identification part 111 is located outside the first housing 231, and the identification part 111 may also have a function of connecting to the optical fiber adapter 30.

For example, the identification part 111 is an elastic card fastener, and the elastic card fastener is used to detachably connect to the optical fiber adapter 30.

As described above, a structure of the optical fiber adapter 30 is arranged based on the type of the optical fiber connector 100. In some embodiments, the optical fiber adapter 30 may be fixedly connected to the optical fiber connector 100.

For example, an optical fiber connector 100 is fixedly connected to the optical fiber adapter 30, and another optical fiber connector 100 is detachably connected to the optical fiber adapter 30. For example, the frame sleeve 110 and the optical fiber adapter 30 are integrally formed.

In some embodiments, the optical fiber connector 100 may be arranged based on a usage scene of an optical link.

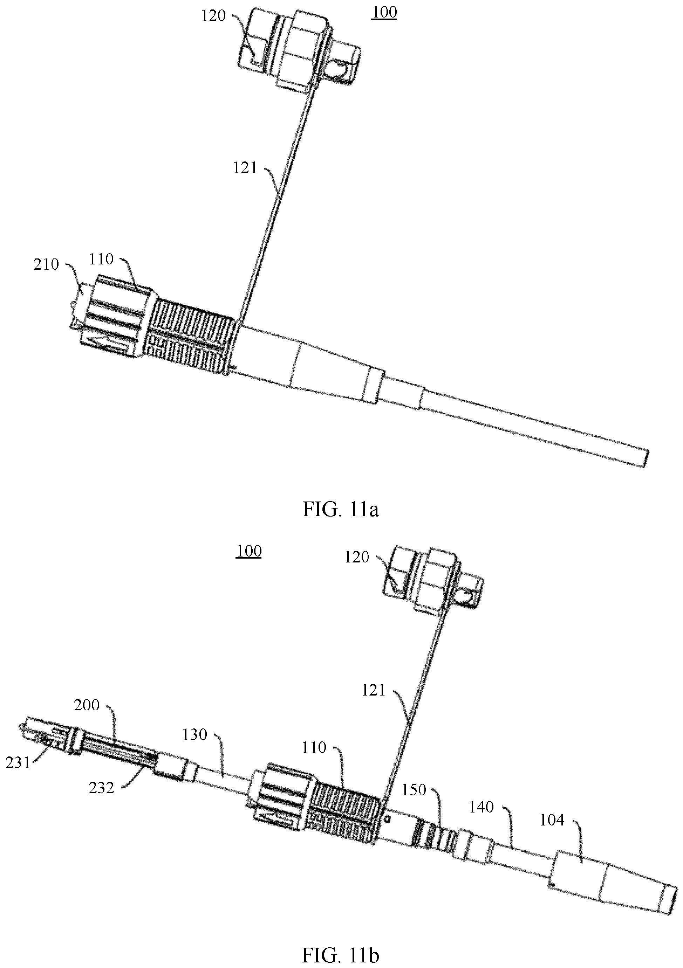

FIG. 11a is a diagram of a structure of another optical fiber connector 100 according to an embodiment of this application. In FIG. 11a, a protective cap 120 is arranged for the optical fiber connector 100, and the protective cap 120 is detachably connected to an end of the optical fiber connector 100. The protective cap 120 prevents stains, water vapor, or the like from entering the optical fiber connector 100.

During assembly, the protective cap 120 is separated from the optical fiber connector 100, and then the optical fiber connector 100 is inserted into the optical fiber adapter 30 for interconnection.

In some embodiments, the protective cap 120 is connected to the optical fiber connector 100 through a connecting rope 121, so that the protective cap 120 can be prevented from being lost.

A structure of the protective cap 120 is not limited in this embodiment of this application. After the protective cap 120 is connected to the optical fiber connector 100, the protective cap 120 may prevent dust, water vapor, and the like from entering the optical fiber connector 100.

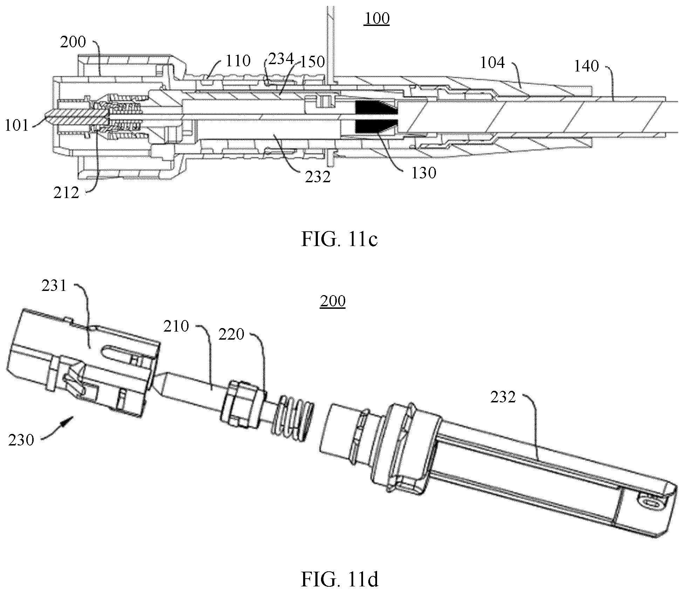

FIG. 11b is an exploded view of the optical fiber connector 100 in FIG. 11a. FIG. 11c is a diagram of an internal structure of the optical fiber connector 100 in FIG. 11a. In FIG. 11b and FIG. 11c, the optical fiber connector 100 includes the frame sleeve 110 and the ferrule assembly 200, and the frame sleeve 110 is sleeved on the ferrule assembly 200.

The optical fiber connector 100 further includes an adhesive-filled sleeve 130, a heat shrink tube 140, and a shaft sleeve 150.

For example, one end of the adhesive-filled sleeve 130 is connected to the second housing 232, and the other end is connected to the shaft sleeve 150. One end of the heat shrink tube 140 is connected to the shaft sleeve 150. The tail sheath 105 is sleeved on the heat shrink tube 140.

The ferrule assembly 200, the adhesive-filled sleeve 130, and the shaft sleeve 150 are all located in the frame sleeve 110 and connected to the frame sleeve 110.

A connection manner of the adhesive-filled sleeve 130 and the housing 230 is not limited in this embodiment of this application. For example, the manner may be that a groove clamps a boss for connection.

Similarly, a connection manner between the housing 230 and the frame sleeve 110 may be, for example, clamping, bonding, or the like.

A through hole is arranged in each of the adhesive-filled sleeve 130, the shaft sleeve 150, and the heat shrink tube 140, and the adhesive-filled sleeve 130, the shaft sleeve 150, and the heat shrink tube 140 are sequentially connected. The optical fiber 101 is located in the through hole and is connected to the through hole.

For example, the through hole is filled with adhesive, and the optical fiber 101 is connected to the through hole using adhesive.

The adhesive-filled sleeve 130 has a waterproof and dustproof function, and can prevent dust, water vapor, and the like from entering the second housing 232 and the shaft sleeve 150. In addition, adhesive inside the adhesive-filled sleeve 130 has a function of fixing the optical fiber 101.

The heat shrink tube 140 also has a waterproof and dustproof function. In addition, the heat shrink tube 140 may reduce impact of an ambient temperature change on mechanical strength of the optical fiber connector 100.

FIG. 11d is a diagram of a structure of the ferrule assembly 200 in FIG. 11a. A difference between the ferrule assembly 200 in FIG. 11d and the ferrule assembly 200 in FIG. 4a lies in that the housings 230 are different. For other structures, refer to descriptions in the example shown in FIG. 4a.

The housing 230 includes the first housing 231 and the second housing 232. For a connection manner of the first housing 231 and the ferrule module 210 and the ring 220, refer to descriptions in the example shown in FIG. 4a. A connection manner of the second housing 232 and the ferrule module 210 and the ring 220 is similar, and details are not described herein again.

In FIG. 11c, a sealing ring 234 is arranged on an outer circumferential surface of the first housing 231, and when the first housing 231 and the frame sleeve 110 are in a connected state, the sealing ring 234 abuts against the frame sleeve 110. In this way, air-tightness between the first housing 231 and the frame sleeve 110 may prevent dust or water vapor from polluting the ferrule module 210 and the ring 220.

In addition, the heat shrink tube 140 may prevent dust or water vapor from entering the optical fiber connector 100 from a tail end of the optical fiber connector 100. In this way, when the optical fiber connector 100 is located in an environment such as underwater, an inside part of the ferrule assembly 200 is not easily contaminated.

In this way, the first housing 231, the second housing 232, the sealing ring 234, the adhesive-filled sleeve 130, the heat shrink tube 140 and the shaft sleeve 150 form an excellent waterproof cavity.

It may be understood that, in some embodiments, the ferrule assembly 200 may be configured with a waterproof housing of another structure. For example, the waterproof housing is sleeved on the ring 220, so that dust or water vapor may be prevented from entering the optical fiber 101 from an outer surface of the ring 220.

Alternatively, the waterproof housing is sleeved on the ferrule module 210, so that dust or water vapor may be prevented from entering the optical fiber 101 from the outer surface of the ferrule module 210.

Alternatively, the waterproof housing is sleeved on both the ring 220 and the ferrule module 210, so that dust or water vapor may be prevented from entering the optical fiber 101 from the outer surfaces of the ring 220 and the ferrule module 210.

In some embodiments, to improve waterproof performance of the optical fiber connector 100, a sealing kit may also be arranged between the shaft sleeve 150 and the frame sleeve 110. Similarly, water vapor and dirt in an external environment may be prevented from entering the optical fiber connector 100, so as to prevent the ferrule assembly 200 from being contaminated, thereby avoiding deterioration of optical performance of the optical fiber connector 100.

A process of connecting the ferrule assembly 200 and the optical fiber 101 is not limited in this embodiment of this application. The following uses a process of connecting the optical fiber 101 and the optical fiber connector 100 shown in FIG. 10a as an example for description.

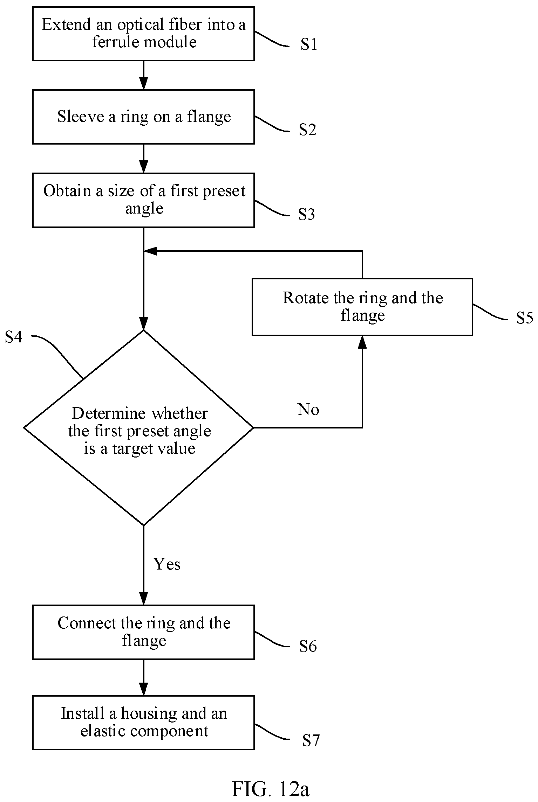

FIG. 12a is a flowchart of a connection process of a ferrule assembly and an optical fiber according to an embodiment of this application. In FIG. 12a, the connection process includes the following steps:
S1. Extend an optical fiber 101 into a ferrule module 210.

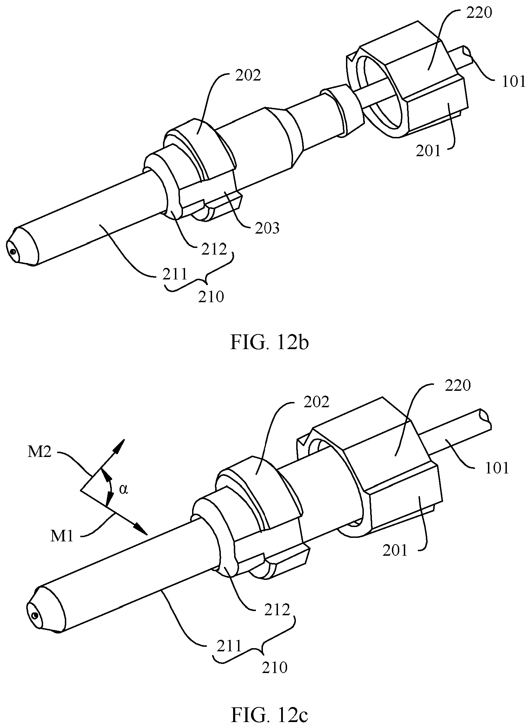

   FIG. 12b is a diagram of a structure obtained by performing S1 in FIG. 12a. A ferrule 211 is sleeved on the optical fiber 101 and is connected to the optical fiber 101, and a flange 212 is connected to the optical fiber 101. For example, the flange 212 and the ferrule 211 are filled with adhesive.
S2. Sleeve a ring 220 on the flange 212.
   FIG. 12c is a diagram of a structure obtained by performing S2 in FIG. 12a. In this case, a relative position of the ring 220 and the flange 212 is not fixed.
S3. Obtain a size of a first preset angle α.
   A method for obtaining the first preset angle α is not limited in this embodiment of this application. For example, a centering device may be used to detect a relative position between an axis of the ferrule module 210 and an axis of the optical fiber 101, and then detect a relative position of a center of the positioning part 201 and the axis of the ferrule module 210, to obtain the first preset angle α through calculation.
S4. Determine whether the first preset angle α is a target value.

A value of the target value is not limited in this embodiment of this application.

If a determination result is no, S5 is performed. If a determination result is yes, S6 is performed.

S5. Rotate the ring 220 and the flange 212.

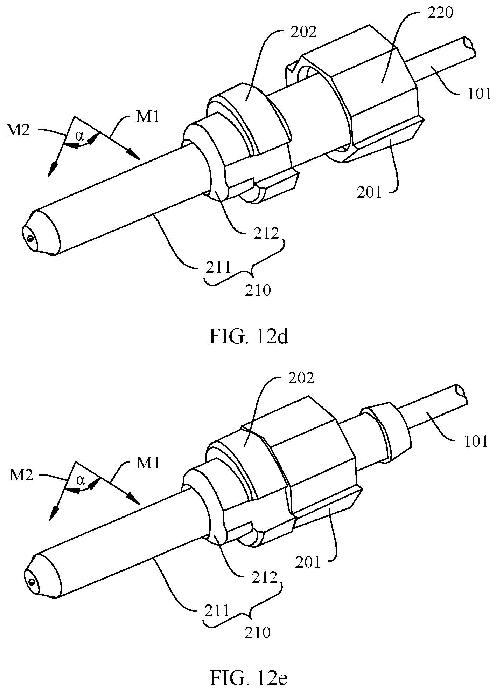

FIG. 12d is a diagram of a structure obtained by performing S5 in FIG. 12a.

S6. Connect the ring 220 and the flange 212.

FIG. 12e is a diagram of a structure obtained by performing S6 in FIG. 12a.

Then, S3 and S5 are continued to be performed until S4 ends.

S7. Install the housing 230 and the elastic member 240.

FIG. 8 is a diagram of a structure obtained by performing S7 in FIG. 12a. Refer to related descriptions in FIG. 10c. Details are not described herein again.

The connection procedure shown in FIG. 12a is simple, and the positioning part 201 may position the axis of the optical fiber 101.

When two ferrule assemblies 200 are in an interconnected state, positioning parts 201 of the two ferrule assemblies 200 are opposite. Apparently, two optical fibers 101 are also opposite, and a signal loss of the optical fiber 101 is relatively small.

It may be understood that, in some embodiments, the size of the first preset angle α may be 0°. In this way, the axis of the ferrule module 210, the axis of the optical fiber 101, and the positioning part 201 are coplanar, and assembly time can be reduced in an assembly process.

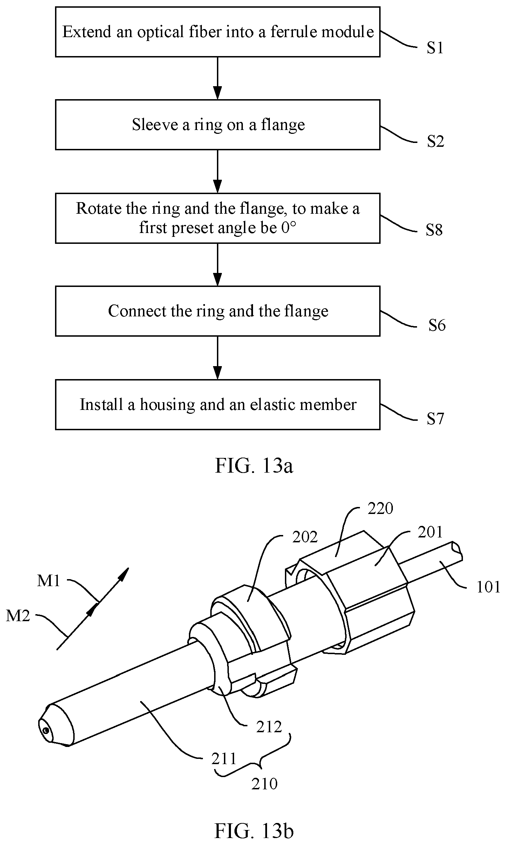

FIG. 13a is a flowchart of another connection process of a ferrule assembly and an optical fiber according to an embodiment of this application. In FIG. 13a and FIG. 12a, after S2, the connection process includes the following steps:
S8. Rotate the ring 220 and the flange 212, to make the first preset angle be 0°.

FIG. 13b is a diagram of a structure obtained by performing S8 in FIG. 13a. In FIG. 13b, an M1 direction is the same as an M2 direction. An included angle between the M1 direction and the M2 direction is 0°.

After S8 is performed, S6 is performed.

Similarly, in the example shown in FIG. 13a, the connection procedure is simple, where the optical fiber 101 is positioned through the positioning part 201. In this way, an overlap degree of end faces of the optical fibers 101 in an interconnected state can be improved, and an optical signal loss can be reduced.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A ferrule assembly (200), wherein the ferrule assembly (200) is used to be connected to an optical fiber (101), and the ferrule assembly (200) comprises:
a ferrule module (210), wherein the ferrule module (210) is used to be connected to an end of the optical fiber (101), and the ferrule module (210) is sleeved on the optical fiber (101); and
a ring (220), wherein the ring (220) is sleeved on the ferrule module (210), the ring (220) is rotatable relative to the ferrule module (210), a positioning part (201) is arranged on a surface of the ring (220), and the positioning part (201) is for positioning the optical fiber (101).

2. The ferrule assembly (200) according to claim 1, wherein the positioning part (201) is located on an end face of the ring (220).

3. The ferrule assembly (200) according to claim 1, wherein the positioning part (201) is located on an outer circumferential surface of the ring (220).

4. The ferrule assembly (200) according to any one of claims 1 to 3, wherein an inner circumferential surface of the ring (220) is circular.

5. The ferrule assembly (200) according to any one of claims 1 to 4, wherein the ferrule module (210) comprises a ferrule (211) and a flange (212), the ferrule (211) is sleeved on the optical fiber (101), the flange (212) is sleeved on the ferrule (211), the flange (212) is connected to the optical fiber (101), the ring (220) is sleeved on the flange (212), and the ring (220) is rotatable relative to the flange (212).

6. The ferrule assembly (200) according to claim 5, wherein an end face of the ferrule (211) protrudes from an end face of the flange (212).

7. The ferrule assembly (200) according to claim 5 or 6, wherein a stop portion (202) is arranged at an end of the flange (212) along an axial direction, and when the ring (220) is in a connected state with the flange (212), the stop portion (202) abuts against the ring (220).

8. The ferrule assembly (200) according to any one of claims 5 to 7, wherein an inner wall of the ring (220) has a first step surface, an outer wall of the flange (212) has a second step surface, and when the ring (220) is in the connected state with the flange (212), the first step surface abuts against the second step surface.

9. The ferrule assembly (200) according to any one of claims 5 to 8, wherein at least a part of an outer surface of the flange (212) is a rough surface, and the rough surface is in interference fit with the ring (220).

10. The ferrule assembly (200) according to claim 9, wherein the rough surface is provided with a plurality of convex edges (204), and the convex edges (204) extend along an axial direction of the flange (212).

11. The ferrule assembly (200) according to any one of claims 1 to 10, wherein a surface of the ferrule module (210) has a grabbing part (203).

12. The ferrule assembly (200) according to any one of claims 1 to 11, wherein the ferrule assembly further comprises a housing (230), the housing (230) is sleeved on the ring (220), and the housing (230) is connected to the ferrule module (210) or the ring (220).

13. The ferrule assembly (200) according to claim 12, wherein a connecting part (233) is arranged on an inner wall of the housing (230), and the connecting part (233) is connected to the positioning part (201).

14. The ferrule assembly (200) according to claim 13, wherein the positioning part (201) is a convex part, and the connecting part (233) is a groove.

15. The ferrule assembly (200) according to claim 13, wherein the positioning part (201) is a groove, and the connecting part (233) is a convex part.

16. The ferrule assembly (200) according to any one of claims 12 to 15, wherein an identification part (111) is arranged on a surface that is of the housing (230) and that is away from the ring (220), and the identification part (111) is for positioning the positioning part (201).

17. The ferrule assembly (200) according to any one of claims 1 to 16, wherein the ferrule assembly further comprises a waterproof housing, and the waterproof housing is sleeved on the ring (220) or the ferrule module (210).

18. The ferrule assembly (200) according to any one of claims 1 to 17, wherein the ferrule assembly further comprises: an elastic member (240), and the elastic member (240) is elastically connected to the ferrule module (210) or the ring (220).

19. A prefabricated optical fiber, wherein the prefabricated optical fiber comprises: an optical fiber (101) and the ferrule assembly according to any one of claims 1 to 18, an end of the optical fiber (101) is connected to the ferrule module (210), and the ferrule module (210) is sleeved on the optical fiber (101) and is connected to the optical fiber (101).

20. An optical fiber connector (100), wherein the optical fiber connector is used to be connected to an optical fiber adapter (30), the optical fiber connector comprises a frame sleeve (110) and the ferrule assembly (200) according to any one of claims 1 to 18, the frame sleeve (110) is sleeved on the ferrule assembly (200), and the frame sleeve (110) is used to be connected to the optical fiber adapter (30).
